# EUROPEAN PATENT SPECIFICATION

(11) **EP 1 768 333 B1**
(45) Date of publication and mention of the grant of the patent: **13.08.2014**
(21) Application number: 05755244.0
(22) Date of filing: 30.06.2005
(51) Int. Cl.: H04W 4/12

(54) **Message transfer system and message transfer method**
Nachrichtentransfersystem und Nachrichtentransferverfahren
Système de transfert de messages et procédé de transfert de messages

(30) Priority: 06.07.2004 JP 2004199768
(43) Date of publication of application: 28.03.2007
(73) Proprietor: NTT DoCoMo, Inc., Tokyo 100-6150 (JP)
(72) Inventor: SAWADA, Hisanori, IP Dept., NTT DoCoMo, Inc., Tokyo 100-615 (JP); EGUCHI, Ayumi, IP Dept., NTT DoCoMo, Inc., Tokyo 100-615 (JP); KOBAYASHI, Kayo, IP Dept., NTT DoCoMo, Inc., Tokyo 100-615 (JP); MIYAMOTO, Hidenori, IP Dept., NTT DoCoMo, Inc., Tokyo 100-615 (JP); NASU, Tooru, IP Dept., NTT DoCoMo, Inc., Tokyo 100-6150 (JP); YAMAGUCHI, Hiroki, IP Dept., NTT DoCoMo, Inc., Tokyo 100-6150 (JP)
(74) Representative: Viering, Jentschura & Partner Patent- und Rechtsanwälte
(86) International application number: PCT/JP2005/012086
(87) International publication number: WO 2006/003994

(56) References cited:
- EP-A- 1 261 179
- WO-A2-98/10342
- DE-A1- 10 023 249
- DE-A1- 10 235 819
- JP-A- 2003 187 143
- JP-A- 2003 249 964
- JP-A- 2003 348 158
- US-A1- 2003 096 600
- US-A1- 2003 204 568
- US-A1- 2004 005 040

## Description

### Technical Field

The present invention relates to a message transfer system and message transfer method for relaying a message on a communication network.

### Background Art

A method of transmitting message data via a server such as a mail server connected to a communication network is commonly used as a method of electronically transmitting a message through a communication network. An example of this technology is an e-mail processing system described in Japanese Patent Application Laid-Open No. 2003-233566. This e-mail processing system is configured to receive message data as an object to be transmitted, through a Web browser on a terminal, to add a fixed phrase to the message data to create new message data, and to transmit the new message data to a destination terminal.

### Disclosure of the Invention

In the conventional e-mail transmitting method as described above, unspecified terminals can transmit various messages, and there are thus cases where a malicious user transmits a harmful message to a destination user or transmits a message with link information for unilateral advertising purposes or the like.

Particularly, the message data is recently often transmitted, for example, by using HTML (HyperText Markup Language) which is a language for describing Web pages. In this case, there are such activities that tag information is added to message data to force a recipient to refer to a specific image file or a sound file, and that link information is added to the message data to guide a recipient so as to refer to a specific Web page. Transmission of such message data annoys the recipient and results in wasting the communication ressources on the communication network side.

Document US2004005040 discloses a system for allowing a user to receive transmission request and message data to be transmitted to a destination, converting the message data into a predetermined format and filtering the messages based on transmitter's address.

Document DE10235819 discloses the possibilities of detecting and deleting of the restricted object data from transmitted messages data, thereby converting message data into the transmitting message.

The present invention has been accomplished in view of the above problem and an object of the present invention is therefore to provide a message transfer system and message transfer method capable of preventing transmission of a useless message by restricting a content of a transmitted message on a communication network.

The invention is defined by the message transfer system according to claim 1 and the message transfer method according claim 3.

### Brief Description of the Drawings

Fig. 1 is a schematic configuration diagram showing a preferred embodiment of the message transfer system.
Fig. 2 is a diagram showing a configuration of data stored in an authentication information storage shown in Fig. 1.
Fig. 3 is a diagram showing a configuration of data stored in a subscriber information storage shown in Fig. 1.
Fig. 4 is a flowchart showing operation during message transfer of the message transfer system shown in Fig. 1.
Fig. 5 (a) is a diagram showing a content of a template for a conversion process executed by a message converter shown in Fig. 1, and Fig. 5 (b) a diagram showing a content of transmitting message data converted by the message converter shown in Fig. 1.
Fig. 6 is a diagram showing an example of outputting transmitting message data at a communication terminal of a message destination.
Fig. 7 is a diagram showing a modification example of transmitting message data converted by the message converter shown in Fig. 1

### Best Modes for Carrying Out the Invention

An example of the present invention will be described with reference to the drawings. In the drawings the same elements will be denoted by the same reference symbols, without redundant description.

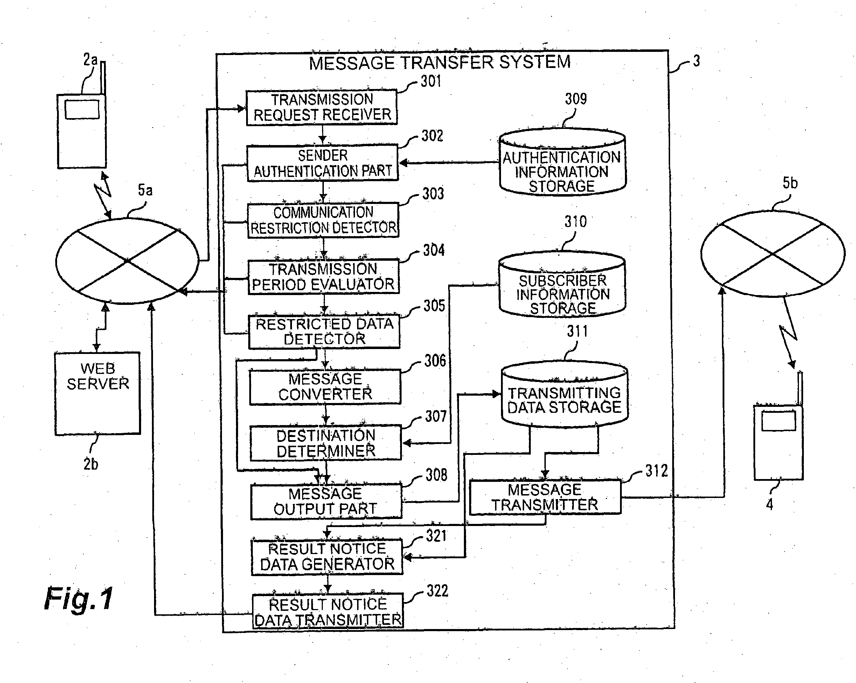

Fig. 1 is a schematic configuration diagram showing a preferred example of the message transfer system according to the present invention. The message transfer system 3 shown in the same drawing is a server unit (or an assembly of server units) for editing and relaying electronic message data. The message transfer system 3 is connected to Web server 2b and communication terminal 2a through communication network 5a so as to be able to communicate with them and is also connected to communication terminal 4 through communication network 5b so as to be able to communicate with it. Each of the communication networks 5a, 5b is a communication network such as a mobile telecommunications network, a fixed-line network, a private line, an Internet network, and a combination of these communication networks. In Fig. 1, for convenience' sake of description, there are the communication terminals 2a, 4 and Web server 2b one each illustrated, but the system may incorporate other communication terminals and Web servers not illustrated.

The Web server 2b is a server unit that delivers data for displaying of Web pages providing various information such as commodity information, premium point information, and account balance information to users using communication terminals. The Web server 2b also functions as a server unit (message sender equipment) used by a message sender that intends to transmit message data to communication terminal 4.

The communication terminal 2a is a communication terminal (message sender equipment) used by a message sender, and the communication terminal 4 is a communication terminal as a message destination designated by the message sender. The communication terminals 2a, 4 can be selected from a variety of communication terminals such as cell phones, PHSs (Personal Handyphone Systems), PDAs (Personal Digital Assistants), and personal computers, and are preferably mobile telecommunications terminals such as the cell phones, PHSs, and PDAs in terms of high convenience in connection from users to communication networks 5a, 5b.

The message transfer system 3 has a function of transferring message data from Web server 2b or from the communication terminal 2a for message sender equipment to the communication terminal 4 for a message destination. The message transfer system 3 is constructed of functional components including a transmission request receiver (transmission request receiving means) 301, a sender authentication part 302, a communication restriction detector 303, a transmission period evaluator 304, a restricted data detector (restricted data detecting means) 305, a message converter (message converting means) 306, a destination determiner (destination determining means) 307, a message output part (message outputting means) 308, an authentication information storage 309, a subscriber information storage (subscriber information storing means) 310, a transmitting data storage 311, a message transmitter 312, a result notice data generator 321, and a result notice data transmitter 322. The components of the message transfer system 3 will be described below in detail.

The transmission request receiver 301 is a part that receives transmission request information containing a service provider ID (sender specifying information) specifying a message sender, a service ID (service specifying information) specifying a service to which a user at a message destination subscribes, a membership number (destination information) specifying the message destination, and message data to be transmitted to the message destination, from the Web server 2b or from the communication terminal 2a. For example, the transmission request receiver 301 receives message data comprised of a user ID "12345+6789" which is a combination of a service provider ID with a service ID, a password "XXXX," a membership number "MEM001," a title "Site Renewal," and a body "Website was redesigned." from the Web server 2b. The transmission request receiver 301 extracts the service provider ID, service ID, password, membership number, and message from the received transmission request information and delivers them to the sender authentication part 302, the restricted data detector 305, the message converter 306, and destination determiner 307

The sender authentication part 302 is a part that performs a process of authenticating a message sender on the basis of the service provider ID, service ID, and password received from the transmission request receiver 301. More specifically, the sender authentication part 302 refers to the authentication information storage 309 on the basis of the service provider ID and service ID to determine whether the service provider ID and service ID are preliminarily stored in the authentication information storage 309, thereby implementing authentication of the message sender.

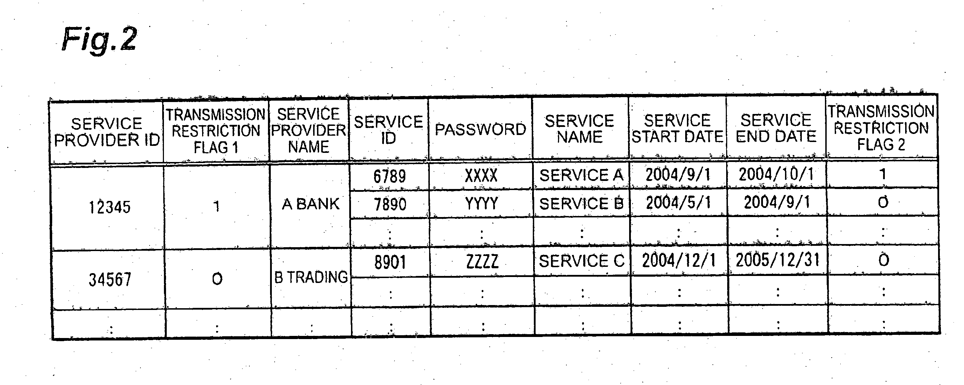

Fig. 2 shows a configuration of data stored in the authentication information storage 309. As shown in the same drawing, the authentication information storage 309 stores a service provider ID "12345" specifying a service provider of a service provided by Web server 2b, more than one service ID "6789" ... specifying services provided by Web server 2b, and passwords "XXXX" ... set for the respective service IDs in association with each other.

The sender authentication part 302 determines whether a record with the service provider ID and service ID agreeing with those in the request is stored in the authentication information storage 309 and, when the record is stored, the sender authentication part 302 further retrieves the password included in the record and performs authentication based on whether the retrieved password agrees with the password received from the transmission request receiver 301. For example, when the sender authentication part 302 receives the service provider ID "12345," service ID "6789," and password ""XXXX" from the transmission request receiver 301, it retrieves the password "XXXX" from the authentication information storage 309 and performs the password authentication. The sender authentication part 302 delivers the result "OK/NG" of the above password authentication, and the record retrieved from the authentication information storage 309, to the communication restriction detector 303.

Referring back to Fig. 1, the communication restriction detector 303 is a part that, in the case of the password authentication result from the sender authentication part 302 being "OK," detects a restriction against message transmission from a message sender and performs a process of suspending the message transmission. Specifically, the communication restriction detector 303 extracts a transmission restriction flag 1 corresponding to the service provider ID and a transmission restriction flag 2 corresponding to the service ID (cf. Fig. 2) from the record received from the sender authentication part 302, and performs the process of suspending the message transmission when either one of the flags is on, "1." These transmission restriction flags are flags preliminarily set in the message transfer system 3 in order to restrict the message transmission in service provider units and in service units. When the transmission restriction flags both are off, "0," the communication restriction detector 303 delivers the record received from the sender authentication part 302, to the transmission period evaluator 304.

The transmission period evaluator 304 is a part that determines whether the message is transmitted by the message transmitter within a preset transmission period and that performs a process of suspending the message transmission when the message is transmitted out of the transmission period. Specifically, the transmission period evaluator 304 extracts a service start date and a service end date (cf. Fig. 2) corresponding to the service provider ID and service ID from the record received from the communication restriction detector 303, and performs the process of suspending the message transmission when the time of reception of the transmission request information is out of the transmission period specified by the service start date and the service end date. For example, where the reception time of the transmission request information is "2004/8/31 10:00:00" and where the service start date and the service end date are "2004/9/1" and "2004/10/1," respectively, the transmission period evaluator 304 determines that the reception time is out of the transmission period and performs the suspending process of message transmission. When the reception time is determined to be within the transmission period, the transmission period evaluator 304 delivers the record received from the communication restriction detector 303, to the message converter 306.

The restricted data detector 305 is a part that detects predetermined restricted object data from the message data included in the transmission request information when the transmission period evaluator 304 determines that the reception time of the transmission request information is within the transmission period. The restricted object data preliminarily designated is, for example, tag information containing a specific character, such as tag information containing link information to a specific Web page including character "HREF," and tag information for embedding a graphic image containing character "IMG." When detecting restricted object data in the message data, the restricted data detector 305 performs a control not to output the transmitting message data (which will be detailed hereinafter) to the message output part 308.

The message converter 306 is a part that converts the message data in the transmission request information into transmitting message data in a predetermined format. Namely, the message converter 306 separates the title and the body included in the message data, and edits the data by adding tag information in HTML format. The message converter 306 extracts a service name (cf. Fig. 2) corresponding to the service ID from the record received from the transmission period evaluator 304, and adds it to the message data edited as described above. Furthermore, the message converter 306 also performs a process of adding fixed tag information preliminarily registered in the message transfer system 3, to the message data. Link information to a Web page, providing information useful to users, is preferably used as the foregoing tag information. The message converter 306 delivers the transmitting message data resulting from the above-described conversion, to the message output part 308.

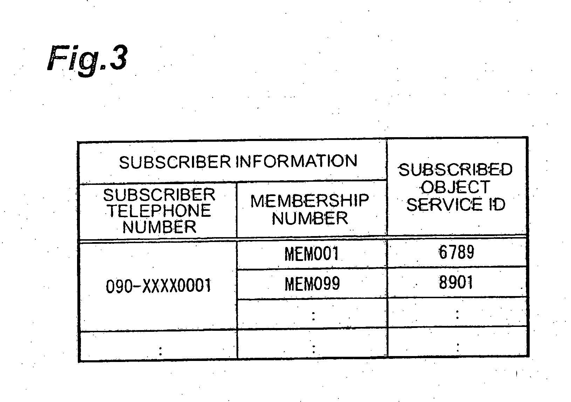

The destination determiner 307 is a part that refers to the subscriber information storage 310 to retrieve communication address information corresponding to the membership number included in the transmission request information. Fig. 3 shows a configuration of data stored in the subscriber information storage 310. As shown in the same drawing, the subscriber information storage 310 stores a subscripted object service ID (service specifying information) "6789" specifying a service provided by a message sender, a membership number (subscriber information) "MEM001" specifying a service subscriber to the service, and a subscriber telephone number "090-XXXX0001" being a telephone number of a communication terminal used by the service subscriber, in association with each other. Then the destination determiner 307 searches the subscriber information storage 310 on the basis of the service ID and the membership number included in the transmission request information, and determines whether the storage stores a record with the service ID and membership number agreeing with those in the request information. Furthermore, when the storage stores the record with the service ID and membership number agreeing with those in the request information, the destination determiner 307 retrieves the subscriber telephone number included in the record, as communication address information and delivers it to the message output part 308.

In the example of Fig. 3, where the transmission request information contains the service ID "6789" and the membership number "MEM001," the destination determiner 307 retrieves the subscriber telephone number "090-XXXX0001" from the subscriber information storage 310 and delivers it to the message output part 308.

Referring back to Fig. 1, the message output part 308 is a part that adds the subscriber telephone number received from the destination determiner 307, as the communication address information to the transmitting message data received from the message converter 306 and outputs the resultant. In this case, the message output part 308 performs the output of the transmitting message data by storing the data into the transmitting data storage 311.

The message transmitter 312 is a part that transmits the transmitting message data stored in the transmitting data storage 311, to the communication terminal 4. Namely, the message transmitter 312 transmits the transmitting message data, using the subscriber telephone number included in the transmitting message data as a destination. In this case, the message transmitter 312 may act to actively transmit the transmitting message data to the communication terminal 4 by use of SMTP (Simple Mail Transfer Protocol) or the like, or may act to passively transmit the transmitting message data in accordance with a transmission request from the communication terminal 4.

Furthermore, the message transmitter 312 detects a transmission result at the time of a transmission of the transmitting message data, and associates the transmission result with the transmitting message data, and stores the resultant into the transmitting data storage 311. The message transmitter 312 detects a state, which shows the transmission result, such as "00 (normal end)", "01 ("no appropriate membership number)", and "09(communication restricted).

After the transmission of transmitting message data by the message transmitter 312, the result notice data generator 321 refers to the transmitting data storage 311 to generate message transmission result data which is provided for the Web server 2b or for the communication terminal 2a. The membership number which is a transmitted object of the message data, and the transmission result, such as "MEM111, 00," are included in the message transmission result data. More than one membership number and corresponding transmission result may be included in the message transmission result data in case that more than one membership number is an object to be transmitted. The result notice data generator 321 outputs the generated message transmission result data to the result notice data transmitter 322.

The result notice data transmitter 322 transmits the message transmission result data to the Web server 2b or to the communication terminal 2a through the communication network 5a. In this case, the result notice data transmitter 322 may act to actively transmit the message transmission result data to the Web server 2b or to the communication terminal 2a by e-mail using SMTP or the like, or may act to passively transmit the message transmission result data by using HTTP or the like in response to a transmission request from theWeb server 2b or from the communication terminal 2a.

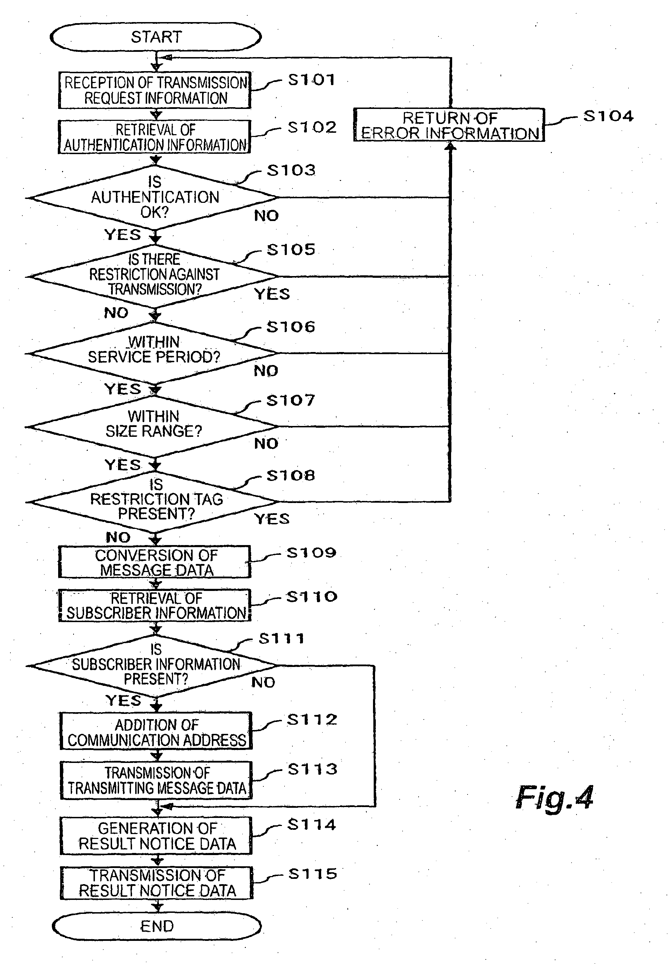

Subsequently, the operation of the message transfer system 3 according to the present example will be described, together with a message transfer method according to an example of the present invention. Fig. 4 is a flowchart showing the operation during message transfer by the message transfer system 3.

First, the transmission request receiver 301 of the message transfer system 3 receives the transmission request information with the message destination of communication terminal 4 from the Web server 2b or from the communication terminal 2a (step S101). Next, the sender authentication part 302 retrieves a record with the service provider ID and service ID agreeing with those in the transmission request information, from the authentication information storage 309 (step S102). Then the sender authentication part 302 determines whether the password stored in the retrieved record agrees with that in the transmission request information (step S103). When it results in determining that the passwords do not agree (step S 103; NO), the sender authentication part 302 sends error information back to the Web server 2b or to the communication terminal 2a being the sender of the transmission request information (stepS 104), and thereafter returns the processing to step S101

On the other hand, when it is determined that the passwords agree (step S103; YES), the communication restriction detector 303 refers to the record retrieved from the authentication information storage 309, thereby determining whether the message transmission by the message sender is restricted (step S105). When it is determined that either the transmission restriction flag 1 or the transmission restriction flag 2 set in the record is "1" (step S105; YES), the communication restriction detector 303 sends error information back to the sender of the transmission request information (step S104), and thereafter returns the processing to step S101.

On the other hand, when the transmission restriction flag 1 and the transmission restriction flag 2 are determined both to be "0" (step S105; NO), the transmission period evaluator 304 refers to the record retrieved from the authentication information storage 309, thereby determining whether the reception time of the transmission request information is within the transmission period (step S106). When it is determined as a result that the reception time of the transmission request information is out of the transmission period (step S106; NO), the transmission period evaluator 304 sends error information back to the sender of the transmission request information (step S104), and then returns the processing to step S101.

On the other hand, when it is determined that the reception time of the transmission request information is within the transmission period (step S106; YES), the restricted data detector 305 determines whether the message data in the transmission request information is not more than a predetermined data size (e.g., 500 bytes) (step S107). When the determination result is that the message data is over the predetermined data size (step S107; NO), the restricted data detector 305 sends error information back to the sender of the transmission request information (step S 104), and then returns the processing to the step S101.

On the other hand, when it is determined that the message data is not more than the predetermined data size (step S107; YES), the restricted data detector 305 further determines whether the message data includes tag information as restricted object data (step S108). When the result is that the message data includes restricted object data (step S108; YES), the restricted data detector 305 sends error information back to the sender of the transmission request information (step S104) and thereafter returns the processing to step S101, thereby performing the control to prevent the message output part 308 from outputting the transmitting message data.

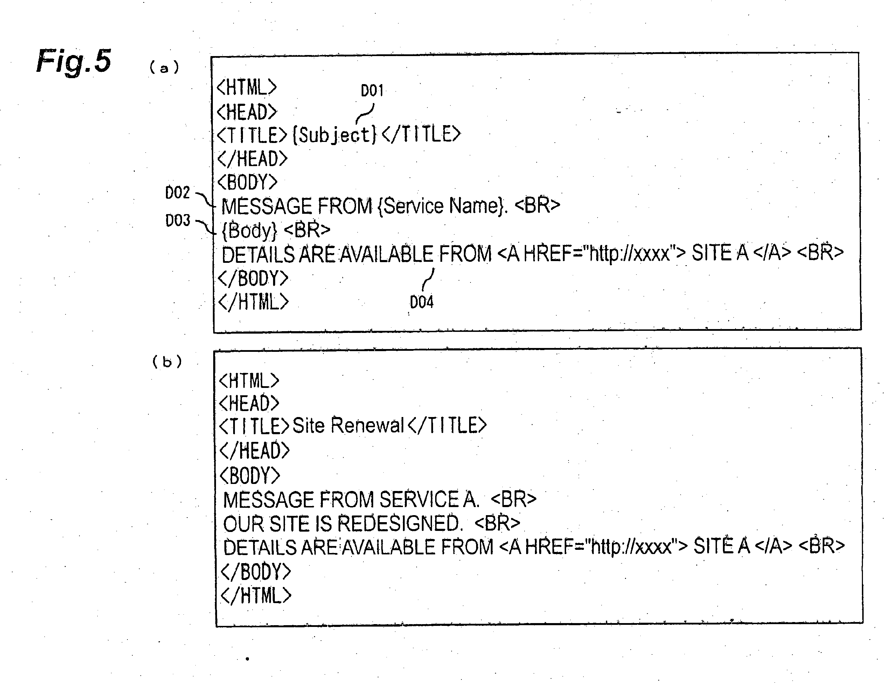

On the other hand, when the message data includes no restricted object data (step S108; NO), the message converter 306 converts the message data into transmitting message data (step S109). In Fig. 5, (a) is a diagram showing a content of a template for the conversion process by the message converter 306, and (b) a diagram showing a content of transmitting message data resulting from the conversion by the message converter 306. The message converter 306 preliminarily retains the template for the conversion process as shown in Fig. 5 (a). This template is described including tag information in HTML format and has an index D01 "{Subject}" for replacement to a title in the message data, an index D02 "{Service Name}" for replacement to a service name corresponding to the service ID in the transmission request information, an index D03 "{Body}" for replacement to a body in the message data, and fixed link information D04 "<A HREF="http://xxxx">." The message converter 306 applies the title and body in the message data, and the service name retrieved from the authentication information storage 309, to the portions of these index D01, index D03and index D02, thereby converting the template into the transmitting message data as shown in Fig. 5 (b).

Referring back to Fig. 4, the destination determiner 307 refers to the subscriber information storage 310 to retrieve the record with the service ID and membership number agreeing with those in the transmission request information (step S110). Then the destination determiner 307 determines whether there is a record with the service ID and membership number agreeing with those in the request information, as a result of the retrieval process (step S111). When it is determined that there is no coincident record (step S111; NO), the message transfer process is terminated. On the other hand, when it is determined that there is a coincident record (step S111; YES), the destination determiner 307 retrieves the subscriber telephone number included in the pertinent record, and thereafter the message output part 308 adds the subscriber telephone number to the transmitting message data and stores it into the transmitting data storage 311 (step S 112).

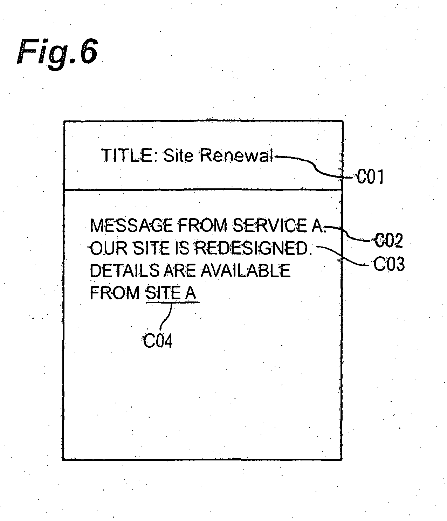

After that, the message transmitter 312 retrieves the transmitting message data from the transmitting data storage 311 and transmits it to the communication terminal 4 (stepS113). Fig. 6 shows an example of outputting the transmitting message data at communication terminal 4. As shown in the same drawing, the indices D01, D02, and D03 after the replacement by the message converter 306 are outputted as character strings C01, C02, and C03, and the link information D04 fixedly added by the message converter 306 is outputted as a character string C04 with a link function.

After the transmitting message data being transmitted, the result notice data generator 321 generates the message transmission result data in which the membership number that is a transmitted object of the transmitting message data and the transmission result are included (step S114). After that, the result notice data transmitter 322 transmits the generated message transmission result data to the Web server 2b or to the communication terminal 2a, being the sender of the transmission request information, by e-mail (step S115).

In the message transfer system 3 described above, when the transmission request information is received from the message sender, the message data in the transmission request information is converted into data in the format preliminarily defined by the template, the communication address information corresponding to the membership number is added to the data, and the data is outputted as transmitting message data to the communication terminal 4. When restricted object data such as tag information is detected in the message data, the control is performed so as not to transmit the restricted object data to the communication terminal 4. Thus, only the message data in the specific format is permitted to be transmitted on the message transfer and, transmission of useless messages is prevented by, for example, restricting transmission of data of kinds that are likely to be abused.

The subscriber information about users subscribing to each service provided by the message sender is preliminarily registered in the subscriber information storage 310, and a service ID to identify a service provided by the message sender is received from the message sender upon a message transmission request. When the message destination identified by the membership number corresponds to a subscriber to the service specified by the service ID, the message data is outputted, whereby the message transmission is permitted for only subscribers to the service provided by the message sender.

Preferably, the transmission request receiving means further receives service specifying information specifying a service to which the message destination subscribes, from the message sender equipment; the message transfer system further comprises: subscriber information storing means for storing service specifying information specifying a service provided by the message sender, and subscriber information specifying every service subscriber to the service, in association with each other; and destination determining means for referring to the subscriber information storing means on the basis of the destination information and the service specifying information, thereby determining whether the subscriber information corresponding to the destination information is registered; when the destination determining means determines that the subscriber information is registered, the message outputting means adds the communication address information to the transmitting message data and outputs the resultant.

In this configuration, the subscriber information about a user subscribing to a service provided by the message sender is preliminarily registered, and the service specifying information to discriminate the service provided by the message sender is received from the message sender upon the message transmission request. When the message destination corresponds to a subscriber to the service specified by the service specifying information, the message data is outputted; therefore, the message transmission can be permitted for only subscribers to the service provided by the message sender.

Furthermore, preferably, when the restricted data detecting means detects tag information in the message data, the restricted data detecting means controls the message converting means so as to filter out the tag information from the message data. With provision of this restricted data detecting means, it is feasible to securely prevent transmission of the tag information that is likely to be transmitted as useless data.

Furthermore, preferably, when the restricted data detecting means detects tag information in the message data, the restricted data detecting means performs a control not to output the transmitting message data. In this case, it is also feasible to securely prevent transmission of the tag information that is likely to be transmitted as useless data.

Furthermore, preferably, the message converting means further adds preregistered tag information to the transmitting message data, and the message outputting means outputs the transmitting message data to which the tag information and the communication address information is added. In this configuration, for example, even in a case where there is a limitation to transmission of tag information such as link information from the message sender side, information more useful to a recipient can be transmitted by preliminarily fixedly setting and adding the tag information.

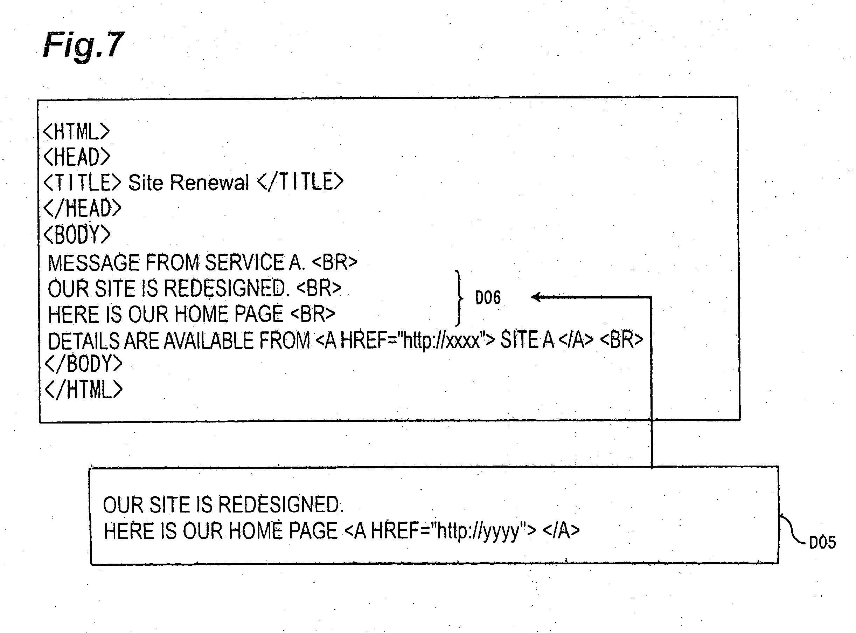

The present invention is by no means limited to the above example. For example, the restricted data detector 305 of the message transfer system 3 is configured to perform the control so as not to transmit the transmitting message data with detection of restricted object data, but the system may also be configured to perform such a control that, with detection of restricted object data such as tag information, the message converter 306 filters out the message data by deleting the restricted object data. In this case, for example, the message converter 306 deletes the tag information including a specific character such as character "HREF" from the body included in the message data, and thereafter applies the body to the template, thereby implementing the conversion into transmitting message data. Fig. 7 shows a modification example of transmitting message data resulting from the conversion by the message converter 306. As shown in the same drawing, the message converter 306 deletes the link information "<A HREF="http://yyyy">" corresponding to restricted object data from the data D05 of the body included in the message data received from the message sender, to convert the data D05 into data D06, thereby generating transmitting message data

The message transfer system 3 is configured to convert the message data into data in HTML format and to transfer it, but the data format is not limited to specific formats; the system may also be configured to act so as to convert the data into another data format such as the text data format.

The message transfer system 3 is configured to transmit the transmitting message data to the communication terminal 4 after storing it into the transmitting data storage 311, but the system may also be arranged to act so as to transfer the data via another computer system such as a mail server to the communication terminal.

The restricted object data preliminarily set in the message transfer system 3 is not limited to the tag information, but various data such as scripts described in a program language can also be set as restricted object data.

### Industrial Applicability

The present invention is intended for a message transfer system and message transfer method transmitting a message on a communication network, and prevents transmission of a useless message by restricting a content of transmitted message on the communication network.

## Claims

1. A message transfer system (3) comprising:
• transmission request receiving means (301) for receiving transmission request information containing destination information specifying a message destination, and message data to be transmitted to the message destination, from a message sender equipment (2a, 2b);
• message converting means (306) for converting the message data into transmitting message data in a predetermined format;
• message outputting means (308) for adding communication address information corresponding to the destination information, to the transmitting message data resulting from the conversion by the message converting means (306), and outputting the resultant; and
**characterised by**
• restricted data detecting means (305) for, when detecting predetermined restricted object data in the message data in the transmission request information received by the transmission request receiving means, performing a control that the message converting means (306) deletes the restricted object data from the message data and thereafter applies the message data to the template for the conversion process, thereby converting the message data into the transmitting message data;
wherein the transmission request receiving means (301) further receives service specifying information specifying a service to which the message destination subscribes, from the message sender equipment (2a, 2b), the message transfer system (3) further comprising:
• subscriber information storing means (310) for storing service specifying information specifying a service provided by the message sender (2a), and subscriber information specifying every service subscriber who subscribes to said service, in association with each other; and
• destination determining means (307) for referring to the subscriber information storing means (310) on the basis of the destination information and the service specifying information, thereby determining whether the subscriber information corresponding to the destination information is registered,
wherein when the destination determining means (307) determines that the subscriber information is registered, the message outputting means adds the communication address information to the transmitting message data and outputs the resultant.

2. The message transfer system (3) according to Claim 1, wherein the message converting means (306) further adds preregistered tag information to the transmitting message data, and wherein the message outputting means (308) outputs the transmitting message data to which the tag information and the communication address information is added.

3. A message transfer method comprising:
• a transmission request receiving step (S101) wherein transmission request receiving means (301) receives transmission request information containing destination information specifying a message destination, and message data to be transmitted to the message destination, from a message sender equipment;
• a message converting step (S109) wherein message converting means (306) converts the message data into transmitting message data in a predetermined format;
• a message outputting step (S113) wherein message outputting means (308) adds communication address information corresponding to the destination information, to the transmitting message data resulting from the conversion in the message converting step (S109), and outputs the resultant; and
**characterised by**:
• a restricted data detecting step (S108) wherein restricted data detecting means (305), when detecting predetermined restricted object data in the message data in the transmission request information received in the transmission request receiving step (S101), performs a control that the message converting means (306) deletes the restricted object data from the message data and thereafter applies the message data to the template for the conversion process, thereby converting the message data into the transmitting message data;
• a service specifying information receiving step wherein the transmission request receiving means (301) further receives service specifying information specifying a service to which the message destination subscribes, from the message sender equipment (2a, 2b),
• a service specifying information storing step wherein subscriber information storing means (310) stores the service specifying information specifying a service provided by the message sender (2a), and subscriber information specifying every service subscriber who subscribes to said service, in association with each other; and
• a destination determining step wherein destination determining means (307) refers to the subscriber information storing means (310) on the basis of the destination information and the service specifying information, thereby determining whether the subscriber information corresponding to the destination information is registered,
wherein when the destination determining means (307) determines that the subscriber information is registered, the message outputting means adds the communication address information to the transmitting message data and outputs the resultant.

## Patentansprüche

1. Nachrichtenübertragungssystem (3) aufweisend:
• Übertragungsanfrage-Empfangsmittel (301) zum Empfangen von Übertragungsanfrageinformation, die Zielinformation, die ein Nachrichtenziel angibt, und Nachrichtendaten enthält, die zu dem Nachrichtenziel übertragen werden sollen, von einem Nachrichtensendergerät (2a, 2b);
• Nachrichtenkonvertierungsmittel (306) zum Konvertieren der Nachrichtendaten in Übertragungsnachrichtendaten in einem vorbestimmten Format;
• Nachrichtenausgabemittel (308) zum Hinzufügen von Kommunikationsadressinformation entsprechend der Zielinformation zu den Übertragungsnachrichtendaten, die aus dem Konvertieren mittels des Nachrichtenkonvertierungsmittel (306) resultieren, und Ausgeben des Resultats; und
**gekennzeichnet durch**
• Eingeschränkte-Daten-Detektionsmittel (305) zum, wenn ein vorbestimmtes eingeschränktes Datenobjekt in den Nachrichtendaten in der Übertragungsanfrageinformation detektiert wird, die mittels des Übertragungsanfrage-Empfangsmittels empfangen wird, Durchführen einer Steuerung, dass das Nachrichtenkonvertierungsmittel (306) das eingeschränkte Datenobjekt aus den Nachrichtendaten löscht und danach die Nachrichtendaten in die Schablone für den Konvertierungsprozess einsetzt, **dadurch** Konvertieren der Nachrichtendaten in die Übertragungsnachrichtendaten;
wobei das Übertragungsanfrageempfangsmittel (301) ferner Dienst-angebende Information, die einen Dienst angibt, bei dem das Nachrichtenziel angemeldet ist, von dem Nachrichtensendergerät (2a, 2b) empfängt, das Nachrichtenübertragungssystem (3) ferner aufweisend:
• Teilnehmerinformationspeichermittel (310) zum Speichern von Dienst-angebender Information, die einen Dienst angibt, der mittels des Nachrichtensenders (2a) bereitgestellt wird, und Teilnehmerinformation, die alle Dienstteilnehmer angibt, die bei dem Dienst angemeldet sind, in Verbindung miteinander stehen; und
• Zielermittlungsmittel (307) zum Bezugnehmen auf das Teilnehmerinformationspeichermittel (310) auf Basis der Zielinformation und der Dienst-angebenden Information, **dadurch** Ermitteln, ob die Teilnehmerinformation, die zu der Zielinformation zugehörig ist, registriert ist,
wobei, wenn das Zielermittlungsmittel (307) ermittelt, dass die Teilnehmerinformation registriert ist, das Nachrichtenausgabemittel die Kommunikationsadressinformation zu den Übertragungsnachrichtendaten hinzufügt und das Resultat ausgibt.

2. Nachrichtenübertragungssystem (3) gemäß Anspruch 1, wobei das Nachrichtenkonvertierungsmittel (306) ferner vorregistrierte Auszeichnerinformation zu den Übertragungsnachrichtendaten hinzufügt, und wobei das Nachrichtenausgabemittel (308) die Nachrichtendaten ausgibt, zu denen die Auszeichnerinformation und Übertragungsadressinformation hinzugefügt ist.

3. Nachrichtentransferverfahren aufweisend:
• einen Übertragungsanfrage-Empfangsschritt (S101), wobei ein Übertragungsanfrage-Empfangsmittel (301) Übertragungsanfrageinformation empfängt, die Zielinformation, die ein Nachrichtenziel angibt, und Nachrichtendaten enthält, die zu dem Nachrichtenziel übertragen werden sollen, von einem Nachrichtensendergerät;
• einen Nachrichtenkonvertierungsschritt (S109), wobei ein Nachrichtenkonvertierungsmittel (306) die Nachrichtendaten in Übertragungsnachrichtendaten in einem vorbestimmten Format konvertiert;
• einen Nachrichtenausgabeschritt (S113), wobei ein Nachrichtenausgabemittel (308) Kommunikationsadressinformation entsprechend der Zielinformation zu den Übertragungsnachrichtendaten hinzufügt, die aus dem Konvertieren in dem Nachrichtenkonvertierungsschritt(S109) resultieren, und Ausgeben des Resultats; und **gekennzeichnet durch**
• einen Eingeschränkte-Daten-Detektionsschritt (S108), wobei ein Eingeschränkte-Daten-Detektionsmittel (305), wenn ein vorbestimmtes eingeschränktes Datenobjekt in den Nachrichtendaten in der Übertragungsanfrageinformation detektiert wird, die in dem Übertragungsanfrageempfangsschritt (S101) empfangen wird, eine Steuerung durchgeführt, dass das Nachrichtenkonvertierungsmittel (306) das eingeschränkte Datenobjekt von den Nachrichtendaten löscht und danach die Nachrichtendaten in die Schablone für den Konvertierungsprozess einsetzt, **dadurch** Konvertieren der Nachrichtendaten in die Übertragungs.nachrichtendaten;
• einen Dienst-angebende-Informationempfangsschritt, wobei das Übertragungsanfrageempfangsmittel (301) ferner Dienst-angebende Information, die einen Dienst angibt, bei dem das Nachrichtenziel angemeldet ist, von dem Nachrichtensendergerät (2a, 2b) empfängt,
• einen Teilnehmerinformationspeicherschritt, wobei ein Teilnehmerinformationspeichermittel (310) die Dienst angebende Information speichert, die einen Dienst angibt, der mittels des Nachrichtensenders (2a) bereitgestellt wird, und Teilnehmerinformation, die alle Dienstteilnehmer angibt, die bei dem Dienst angemeldet sind, und in Verbindung miteinander stehen; und
• einen Zielermittlungsschritt, wobei ein Zielermittlungsmittel (307) auf das Teilnehmerinformationspeichermittel (310) auf Basis der Zielinformation und der Dienst-angebenden Information Bezug nimmt, **dadurch** Ermitteln, ob die Teilnehmerinformation, die zu der Zielinformation zugehörig ist, registriert ist,
wobei, wenn das Zielermittlungsmittel (307) ermittelt, dass die Teilnehmerinformation registriert ist, das Nachrichtenausgabemittel die Kommunikationsadressinformation zu den Übertragungsnachrichtendaten hinzufügt und das Resultat ausgibt.

## Revendications

1. Système de transfert de message (3) comprenant :
- des moyens de réception de demande de transmission (301) destinés à recevoir des informations de demande de transmission qui contiennent des informations de destination qui spécifient une destination de message, et des données de message à transmettre à la destination de message, à partir d'un matériel émetteur de message (2a, 2b) ;
- des moyens de conversion de message (306) destinés à convertir les données de message en données de message de transmission dans un format prédéterminé ;
- des moyens de sortie de message (308) destinés à ajouter des informations d'adresse de communication qui correspondent aux informations de destination, aux données de message de transmission résultant de la conversion par les moyens de conversion de message (306), et à délivrer en sortie le résultat ; et
**caractérisé par** :
- des moyens de détection de données restreintes (305) destinés à exécuter, lors de la détection de données objets restreintes prédéterminées dans les données de message dans les informations de demande de transmission reçues par les moyens de réception de demande de transmission, une commande selon laquelle les moyens de conversion de message (306) effacent les données objets restreintes des données de message et appliquent ensuite les données de message au modèle du processus de conversion, en convertissant de ce fait les données de message en données de message de transmission ;
dans lequel les moyens de réception de demande de transmission (301) reçoivent en outre des informations de spécification de service qui spécifient un service auquel la destination de message souscrit, en provenance du matériel émetteur de message (2a, 2b), le système de transfert de message (3) comprenant en outre :
- des moyens de stockage d'informations d'abonné (310) destinés à stocker des informations de spécification de service qui spécifient un service fourni par l'émetteur du message (2a), et des informations d'abonné qui spécifient chaque abonné de service qui souscrit audit service, en association les unes avec les autres ; et
- des moyens de détermination de destination (307) destinés à se référer aux moyens de stockage d'informations d'abonné (310) sur la base des informations de destination et des informations de spécification de service, en déterminant de ce fait si les informations d'abonné qui correspondent aux informations de destination sont enregistrées ;
dans lequel, lorsque les moyens de détermination de destination (307) déterminent que les informations d'abonné sont enregistrées, les moyens de sortie de message ajoutent les informations d'adresse de communication aux données de message de transmission et délivrent en sortie le résultat.

2. Système de transfert de message (3) selon la revendication 1,
dans lequel, les moyens de conversion de message (306) ajoutent en outre des informations d'étiquettes préenregistrées aux données de message de transmission, et dans lequel les moyens de sortie de message (308) délivrent en sortie les données de message de transmission auxquelles sont ajoutées les informations d'étiquettes et les informations d'adresse de communication.

3. Procédé de transfert de message comprenant :
- une étape de réception de demande de transmission (S101) dans laquelle des moyens de réception de demande de transmission (301) reçoivent des informations de demande de transmission qui contiennent des informations de destination qui spécifient une destination de message, et des données de message à transmettre à la destination de message, à partir d'un matériel émetteur de message ;
- une étape de conversion de message (S 109) dans laquelle des moyens de conversion de message (306) convertissent les données de message en données de message de transmission dans un format prédéterminé ;
- une étape de sortie de message (S113) dans laquelle des moyens de sortie de message (308) ajoutent des informations d'adresse de communication qui correspondent aux informations de destination, aux données de message de transmission résultant de la conversion dans l'étape de conversion de message (S 109), et délivrent en sortie le résultat ; et
**caractérisé par** :
- une étape de détection de données restreintes (S 108) dans laquelle des moyens de détection de données restreintes (305) exécutent, lors de la détection de données objets restreintes prédéterminées dans les données de message dans les informations de demande de transmission reçues dans l'étape de réception de demande de transmission (S101), une commande selon laquelle les moyens de conversion de message (306) effacent les données objets restreintes des données de message et appliquent ensuite les données de message au modèle du processus de conversion, en convertissant de ce fait les données de message en données de message de transmission ;
- une étape de réception d'informations de spécification de service dans laquelle des moyens de réception de demande de transmission (301) reçoivent en outre des informations de spécification de service qui spécifient un service auquel la destination de message souscrit, à partir du matériel émetteur de message (2a, 2b) ;
- une étape de stockage d'informations de spécification de service dans laquelle des moyens de stockage d'informations d'abonné (310) stockent des informations de spécification de service qui spécifient un service fourni par l'émetteur de message (2a), et des informations d'abonné qui spécifient chaque abonné de service qui souscrit audit service, en association les unes avec les autres ; et
- une étape de détermination de destination dans laquelle des moyens de détermination de destination (307) se réfèrent aux moyens de stockage d'informations d'abonné (310) sur la base des informations de destination et des informations de spécification de service, en déterminant de ce fait si les informations d'abonné qui correspondent aux informations de destination sont enregistrées ;
dans lequel, lorsque les moyens de détermination de destination (307) déterminent que les informations d'abonné sont enregistrées, les moyens de sortie de message ajoutent les informations d'adresse de communication aux données de message de transmission et délivrent en sortie le résultat.
